# EUROPEAN PATENT SPECIFICATION

(11) **EP 4 501 715 B1**
(45) Date of publication and mention of the grant of the patent: **21.01.2026**
(21) Application number: 23189270.4
(22) Date of filing: 02.08.2023
(51) Int. Cl.: B60R 22/44, B60R 22/46

(54) **RETRACTOR FOR A SEATBELT DEVICE**
GURTAUFROLLER FÜR EINE SICHERHEITSGURTEINRICHTUNG
ENROULEUR POUR UN DISPOSITIF DE CEINTURE DE SÉCURITÉ

(43) Date of publication of application: 05.02.2025
(73) Proprietor: Autoliv Development AB, 447 83 Vårgårda (SE)
(72) Inventor: Ramar, Vengatesh, 562 114 Bangalore (IN); Aqeeb, Thouseef, 562 114 Bangalore (IN); Shetty, Rakshith, 562 114 Bangalore (IN); Atwadkar, Abhijeet, 562 114 Bangalore (IN); Shetty, Vijay, 562 114 Bangalore (IN); Swain, Abhijit, 562 114 Bangalore (IN); Langhoff, Hans-Jörg, 25337 Elmshorn (DE); Clute, Günter, 25337 Elmshorn (DE)
(74) Representative: Müller Verweyen

(56) References cited:
- DE-A1- 2 526 494
- DE-U1- 9 208 518
- JP-A- S5 799 437
- US-A1- 2002 125 360

## Description

The invention relates to a retractor for a seatbelt device comprising the features of the preamble of claim 1.

The object of a retractor in a seatbelt device is to retract a seatbelt in the seatbelt device for restraining an occupant sitting on a seat in a vehicle. Therefore, the retractor is fixed at the vehicle structure via a frame, wherein the frame comprises at least two opposing bearing flanges each having a bearing opening in which a spindle is rotatably mounted on which the seatbelt may be wound on. The spindle is tensioned via a rotational spring in a retracting direction of the seatbelt, which is mounted with one end at the frame and with the other end at the spindle.

It is further known from the WO 03/ 0 99 619 A2 to provide the retractor with a reversible or irreversible pretensioner which tensions the seatbelt when activated and pulls the slack out of the seatbelt to provide a tight abutment of the seatbelt at the occupant in case of a following accident or to prepare for a possible following accident. As the spindle must be borne rotatably in the frame without being obstructed in the rotational movement by the pretensioner, the pretensioner comprises a driving wheel which is driven by the pretensioner and may be coupled via a clutch with the spindle. Therefore, the driving wheel and the pretensioner are separated during the normal use by the clutch, which is in the open state. If the pretensioner is activated the driving wheel needs to be connected with the spindle in a first step via closing the clutch before the rotational movement of the driving wheel is transferred to the spindle. The clutch comprises two locking pawls which are slidably guided at the driving wheel and perform a movement into a toothing of a tooth ring which is fixed at the spindle when the driving wheel is driven to the rotational movement. The movement of the locking pawls is obliged by a friction ring, which is connected with the locking pawls and abuts at a side wall of the housing, so that the friction ring is braked via friction versus the driving wheel.

The rotational spring is preassembled and pretensioned in a housing to a spring cassette which is mounted at the outer side of the frame or at the outer side of the pretensioner. The rotational spring is fixed with the outer end at the housing and with the inner end at a spring core which is also fixed with a connecting element in a position in which the rotational spring is fixed in the pretensioned position. In the assembling process of the spring cassette at the retractor the spring core is connected with a projection of the spindle, which is directed to the outside of the retractor. After assembling the spring cassette, the connecting element is released and the spindle is tensioned in the retracting direction via the rotational spring with retracting the seatbelt to a coil wound onto the spindle.

One disadvantage of the retractor provided with a drive for a reversible or irreversible prerotational of the seatbelt and a spring cassette can be seen therein, that the necessary installation space in the vehicle is relatively big because of the big dimensions of the retractor in the assembled state.

In view of this background, it is the object of the invention to provide a retractor with an electric drive and a rotational spring which is more cost efficient and comprises smaller dimensions to arrange the retractor also in smaller installation spaces at the vehicle.

According to the invention it is suggested a retractor comprising the features of claim 1. Further preferred embodiments of the invention may be obtained from the subclaims, the figures and the related description.

According to the basic idea of the invention it is suggested that the rotational spring is fixed with a first end at the spindle and with a second end at the housing.

The advantage of the suggested solution can be seen in a very compact design, wherein the housing of the electric drive is used for covering the electric drive and additionally to fix the second end of the rotational spring. Therefore, at least the formerly used housing of the rotational spring realized by the spring cassette may be omitted, which enables a more compact design and a reduction of the manufacturing costs.

Furthermore, it is suggested that the electric drive comprises an electric motor arranged in the housing, and the rotational spring is arranged between the electric motor and the spindle. Therefore, the rotational spring is fixed in a smaller distance to the spindle compared to a design in which the rotational spring is attached at the outer side of the electric drive, and the spindle comprises a projection extending through the electric drive for the connection with the rotational spring. The rotational spring applies the retracting force in a more direct manner and in a shorter distance to the spindle onto which the seatbelt is wound up to the coil. Furthermore, a cavity between the electric drive and the spindle is used to arrange the rotational spring, so that the dimensions of the retractor may be reduced and the retractor may be arranged in smaller installation spaces of the vehicle or a vehicle seat.

Furthermore, it is suggested that the electric motor comprises a rotationally driven rotor, wherein the rotor is arranged coaxially to the spindle. The advantage of this feature can be seen therein that the driving movement of the electric drive need not to be deflected by an additional gear transmission.

Furthermore, it is suggested that the rotational spring is realized by a disc-shaped spiral spring with a plurality of windings. The suggested design of the rotational spring enables a very compact design with a very high retracting length of the seatbelt and a retracting force with a very low deviation of the retracting force with respect to a predetermined retracting force over the whole retracting length of the seatbelt.

Furthermore, it is suggested that the spiral spring is arranged coaxially to the spindle and the rotor of the electric drive to realize the compact design and the direct transmission of the driving movement from the rotor to the spindle and the rotational force of the rotational spring to the spindle.

Furthermore, it is suggested that the housing is designed as a cylindrical housing which comprises one open side and one closed side, wherein the housing is fixed with the open side at the frame. The housing covers therefore the electric drive as well as the rotational spring to the outside to a compact design.

Furthermore, it is suggested that a spring plate is arranged between the rotational spring and the spindle, which provides an abutment surface for the rotational spring in direction to the spindle. The spring plate provides a separation of the rotational spring versus the spindle and prevents a contact of the rotational spring with the spindle. Furthermore, the spring plate limits a sidewise movement of the rotational spring and keeps the rotational spring in a predetermined position versus the spindle.

Furthermore, it is suggested that the spring plate comprises a central opening through which a projection of the spindle is extending, and the rotational spring is fixed with the second end directly or indirectly at the end of the projection of the spindle. The projection extends through the opening of the spring plate and enables a connection of the rotational spring with the spindle at the outer side of the spring plate with respect to the spindle.

Furthermore, it is suggested that the spring plate closes the opening of the housing. The spring plate is therefore used additionally to close the cavity in the housing and to protect all parts arranged therein.

In the following the invention shall be illustrated on the basis of preferred embodiments with reference to the accompanying drawings, wherein:
Fig. 1 shows a retractor having an electric drive in the assembled state, and
Fig. 2 shows the retractor with the electric drive in an exploded view.

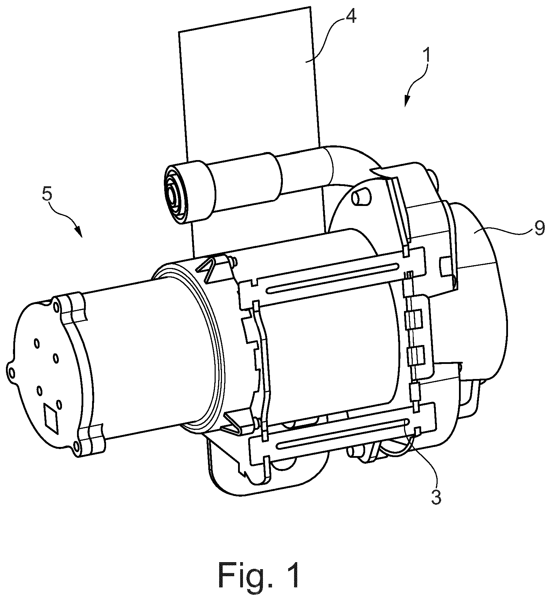

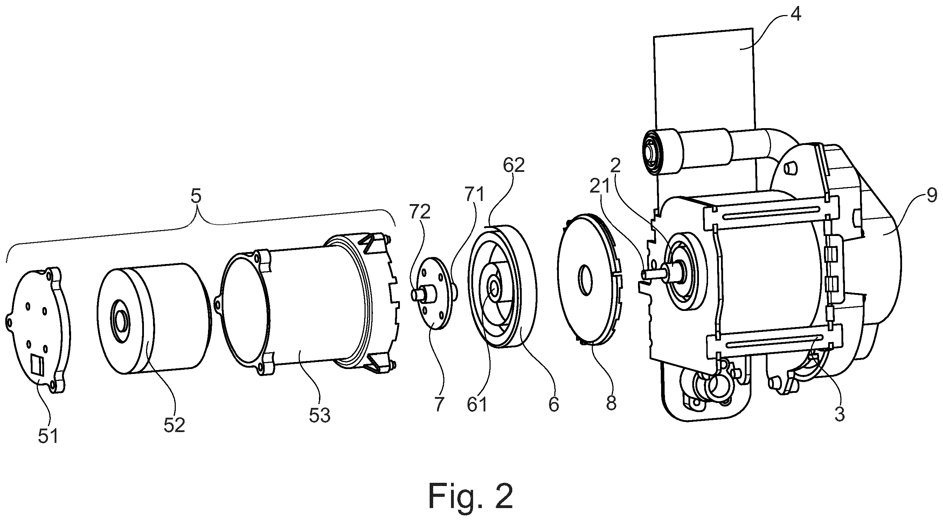

In Fig. 1 it is shown a retractor 1 having a frame 3 and a spindle 2 shown in Fig. 2 with a seatbelt 4 wound up on the spindle 2. The spindle 2 is rotatably mounted in two opposing flanges of the frame 3 like known in the state of the art since long time. The retractor 1 further comprises an irreversible pretensioner 9, which is fixed at the right side of the frame 3 and an electric drive 5 fixed at the left side of the frame 3. The frame 3 itself comprises an attachment projection extending at the down side for a vehicle-fixed fixation of the retractor 1 at a vehicle structure or at a vehicle seat.

The electric drive 5 comprises a tubular housing 53, an electric motor 52 and a cover 51. The electric motor 52 is fixed with its stator part at the cover 51 and is inserted into the free opening of housing 53 which is closed after inserting the electric motor 52 by the cover 51. The cover 51 is fixed at the housing 53 so that the electric motor 52 is fixed also in a predetermined position with respect to the housing 53.

The electric motor 52 comprises further an electric driven rotor having a mass of less than 0,1 kg with a rotatably driven shaft. The shaft is not shown in Fig. 2 and extends towards the spindle 2. Furthermore, a coupler 7 is provided, which is designed as a circular disc with a first recess 71 extending towards the spindle 2 and a second recess 72 extending towards the electric motor 52. The first recess 71 and the second recess 72 each comprise cavities with a non-circular or polygonal cross-section, wherein the shaft of the electric motor 52 is rotationally fixed in the cavity of the second recess 72 and the spindle 2 is rotationally fixed with a projection 21 in the cavity of the first recess 71. Therefore, the coupler 7 forms a permanent rotationally fixed connection of the rotor of the electric motor 52 and with the spindle 2.

Furthermore, a rotational spiral spring 6 is provided which is connected with its first inner end 61 on the outer geometry of the first recess 71 of the coupler 7 and with its outer second end 62 at the housing 53 of the electric drive 5. Between the spindle 2 and the rotational spring 6 is arranged a spring plate 8 which is attached at the outer side of the frame 3 to separate the rotational spring 6 from the spindle 2 and the frame 3. The spring plate 8 provides a sidewise support of the spring 6 to hold the spring 6 in its spiral geometry and to protect the rotational spring 6. The rotational spring 6 tensions the spindle 2 via the coupler 7 and the rotational fixed connection of the projection 21 in the first recess 71 in up-winding direction of the seatbelt 4 in order to up-wind the seatbelt 4 after unbuckling to the parking position.

The electric drive 5 is connected with the electric rotor of the electric motor 52 permanently via the coupler 7 with the spindle 2, so that the electric rotor of the electric motor 52 rotates together with the spindle 2 in the power-off mode during normal use in the pull-out and pull-in direction. The electric rotor is designed with a mass of less than 0,1 kg, so that the inertia forces do not raise the forces to pull-out and pull-in of the seatbelt 4 to an inacceptable level.

The electric drive 5 is activated for example to support the rotational spring 6 for up-winding the seatbelt, to pull-out possible slack out of the seatbelt 4 for a reversible pretensioning or for a haptic warning for example with periodically increasing and/or decreasing the tensioning force in the seatbelt 4. Due to the permanent connection of the electric rotor to the spindle 2 the rotational torque is transmitted without any delay and losses from the electric rotor of the electric motor 52 to the spindle 2. Furthermore, the design is very compact, wherein with the coupler 7 there is only one single additional part for the connection of the electric drive 5 with the spindle 2 needed. The coupler 7 itself needs no own bearing due to the fixed connection with the rotor of the electric drive 5 and the spindle 2.

The housing 53 is tubular shaped and closed by the cover 51 to a closed cup. The housing 53 serves for covering the electric motor 52 and additionally for a fixation of the second end 62 of the rotational spring 6. The fist end 61 is fixed indirectly via the coupler with the projection 21 of the spindle to tension the spindle in the wind-up direction. The spring plate 8 is arranged between the spindle 8 and the rotational spring 6 and closes the open side of the housing 53. The spring plate 8 may be attached directly at the frame 3 or at the housing 53 and separates the rotational spring 6 versus the spindle 8. The spring plate 8 prevents thereby a contact of the rotational spring 6 with the spindle 8 by creating an abutment surface arranged sidewise to the rotational spring 8. Therefore, the spring plate 8 keeps the rotational spring 6 in its disc-shaped geometry in a cavity between the spindle 2 and the electric drive 5 respectively between the spring plate 8 and the electric drive 5.

The spring plate 8 comprises a central opening through which the spindle 2 extends up to the coupler 7, wherein the free end of the projection 21 is connected at the outer side (with respect to the spindle 2) of the spring plate 8 via the first recess 71 of the coupler 7 with the first end 61 of the rotational spring 6.

The rotational spring 6 is designed as a spiral spring with a plurality of windings to a disc-shaped geometry. Therefore, the rotational spring 6 may create the necessary predetermined retracting force for a very long retracting length of the seatbelt 4 in a very compact design. The spindle 2, the rotor of the electric motor 52 and the rotational spring 6 are arranged coaxially, so that the driving movement of the electric motor 52 and the retracting force acted by the rotational spring may be transmitted directly to a rotational movement of the spindle 2 without any deflection. Therefore, there is no further gear mechanism needed.

The rotational spring 6 may be preassembled with the electric drive 5 and the spring plate 8 to a preassembled unit, wherein the rotational spring 8 may be pretensioned in the assembled unit und fixed in the tensioned state by a blocking element. After mounting this preassembled unit at the retractor, the blocking element may be released and the rotational spring 6 tensions the spindle 2 in the up-winding direction. Alternatively, the rotational spring 6 may be also tensioned after the assembling process for example by rotating the spindle 2 and/or rotating the rotor of the electric motor 52.

## Claims

1. Retractor (1) for a seatbelt device comprising:
- a frame (3) for fixing the retractor (1) at a vehicle structure or at a vehicle-fixed seat, and
- a spindle (2) which is rotatably borne in the frame (3), and
- a seatbelt (4), which is wound with one end onto the spindle (2), and
- an electric drive (5) which drives the spindle (2) to a rotational movement when activated, and
- a rotational spring (6), which tensions the spindle (2) to the retracting direction of the spindle (2), **characterized in that**
- the electric drive (5) comprises a housing (53), which is fixed at the frame (3), and
- the rotational spring (6) is fixed with a first end (61) at the spindle (2) and with a second end (62) at the housing (53).

2. Retractor (1) according to claim 1, **characterized in that**
- the electric drive (5) comprises an electric motor (52) arranged in the housing (5), and
- the rotational spring (6) is arranged between the electric motor (52) and the spindle (2).

3. Retractor according to claim 2, **characterized in that**
- the electric motor (52) comprises a rotationally driven rotor, wherein
- the rotor is arranged coaxially to the spindle (2).

4. Retractor (1) according to one of the claims 1 to 3, **characterized in that**
- the rotational spring (6) is realized by a disc-shaped spiral spring with a plurality of windings.

5. Retractor (1) according to claim 3 and 4, **characterized in that**
- the spiral spring is arranged coaxially to the spindle (2) and the rotor of the electric drive (5).

6. Retractor (1) according to one of the claims 1 to 4, **characterized in that**
- the housing (53) is designed as a cylindrical housing (53) which comprises one open side and one closed side, wherein the housing (53) is fixed with the open side at the frame (3).

7. Retractor according to one of the claims 1 to 5, **characterized in that**
- a spring plate (8) is arranged between the rotational spring (6) and the spindle (2), which provides an abutment surface for the rotational spring (6) in direction to the spindle (2).

8. Retractor according to claim 6, **characterized in that**
- the spring plate (8) comprises a central opening through which a projection (21) of the spindle (2) is extending, and
- the rotational spring (6) is fixed with the second end (61) directly or indirectly at the projection (21) of the spindle (2).

9. Retractor according claim 5 and according to one of the claims 6 or 7, **characterized in that**,
- the spring plate (8) closes the opening of the housing (53) .

## Patentansprüche

1. Aufroller (1) für eine Sicherheitsgurtvorrichtung, umfassend:
- einen Rahmen (3) zum Befestigen des Aufrollers (1) an einer Fahrzeugstruktur oder an einem fahrzeugbefestigten Sitz und
- eine Spindel (2), die in dem Rahmen (3) rotierbar gelagert ist, und
- einem Sicherheitsgurt (4), der mit einem Ende auf die Spindel (2) aufgewickelt ist, und
- einen elektrischen Antrieb (5), der die Spindel (2) zu einer Rotationsbewegung antreibt, wenn aktiviert, wobei
- eine Rotationsfeder (6), die die Spindel (2) in die Aufrollrichtung der Spindel (2) vorspannt, **dadurch gekennzeichnet, dass**
- der elektrische Antrieb (5) ein Gehäuse (53) umfasst, das an dem Rahmen (3) befestigt ist, und
- die Rotationsfeder (6) mit einem ersten Ende (61) an der Spindel (2) und mit einem zweiten Ende (62) an dem Gehäuse (53) befestigt ist.

2. Aufroller (1) nach Anspruch 1, **dadurch gekennzeichnet, dass**
- der elektrische Antrieb (5) einen Elektromotor (52) umfasst, der in dem Gehäuse (5) angeordnet ist, und
- die Rotationsfeder (6) zwischen dem Elektromotor (52) und der Spindel (2) angeordnet ist.

3. Aufroller nach Anspruch 2, **dadurch gekennzeichnet, dass**
- der Elektromotor (52) einen rotierend angetriebenen Rotor umfasst, wobei
- der Rotor koaxial zu der Spindel (2) angeordnet ist.

4. Aufroller (1) nach einem der Ansprüche 1 bis 3,
**dadurch gekennzeichnet, dass**
- die Rotationsfeder (6) durch eine scheibenförmige Spiralfeder mit einer Vielzahl von Windungen realisiert ist.

5. Aufroller (1) nach Anspruch 3 und 4, **dadurch gekennzeichnet, dass**
- die Spiralfeder koaxial zu der Spindel (2) und dem Rotor des elektrischen Antriebs (5) angeordnet ist.

6. Aufroller (1) nach einem der Ansprüche 1 bis 4,
**dadurch gekennzeichnet, dass**
- das Gehäuse (53) als ein zylindrisches Gehäuse (53) ausgebildet ist, das eine offene Seite und eine geschlossene Seite umfasst, wobei das Gehäuse (53) mit der offenen Seite an dem Rahmen (3) befestigt ist.

7. Aufroller nach einem der Ansprüche 1 bis 5,
**dadurch gekennzeichnet, dass**
- eine Federplatte (8) zwischen der Rotationsfeder (6) und der Spindel (2) angeordnet ist, die eine Anschlagoberfläche für die Rotationsfeder (6) in Richtung der Spindel (2) bereitstellt.

8. Aufroller nach Anspruch 6, **dadurch gekennzeichnet, dass**
- die Federplatte (8) eine zentrale Öffnung umfasst, durch die sich ein Vorsprung (21) der Spindel (2) erstreckt, und
- die Rotationsfeder (6) mit dem zweiten Ende (61) direkt oder indirekt an dem Vorsprung (21) der Spindel (2) befestigt ist.

9. Aufroller nach Anspruch 5 und nach einem der Ansprüche 6 oder 7, **dadurch gekennzeichnet, dass**
- die Federplatte (8) die Öffnung des Gehäuses (53) verschließt.

## Revendications

1. Rétracteur (1) pour un dispositif de ceinture de sécurité comprenant :
- un cadre (3) pour fixer le rétracteur (1) à une structure de véhicule ou à un siège fixé au véhicule, et
- une broche (2) portée en rotation dans le cadre (3), et
- une ceinture de sécurité (4), dont une extrémité est enroulée sur la broche (2), et
- un entraînement électrique (5) qui entraîne la broche (2) selon un mouvement de rotation lorsqu'il est activé, et
- un ressort rotatif (6), qui sollicite la broche (2) dans la direction de rétraction de la broche (2), **caractérisé en ce que**
- l'entraînement électrique (5) comprend un boîtier (53) qui est fixé au cadre (3), et
- le ressort rotatif (6) est fixé par une première extrémité (61) à la broche (2) et par une seconde extrémité (62) au boîtier (53).

2. Rétracteur (1) selon la revendication 1, **caractérisé en ce que**
- l'entraînement électrique (5) comprend un moteur électrique (52) agencé dans le boîtier (5), et
- le ressort rotatif (6) est agencé entre le moteur électrique (52) et la broche (2).

3. Rétracteur selon la revendication 2, **caractérisé en ce que**
- le moteur électrique (52) comprend un rotor entraîné en rotation, dans lequel
- le rotor est agencé de manière coaxiale à la broche (2).

4. Rétracteur (1) selon l'une des revendications 1 à 3, **caractérisé en ce que**
- le ressort rotatif (6) est réalisé par un ressort en spirale en forme de disque avec une pluralité de spires.

5. Rétracteur (1) selon les revendications 3 et 4, **caractérisé en ce que**
- le ressort en spirale est agencé de manière coaxiale à la broche (2) et au rotor de l'entraînement électrique (5).

6. Rétracteur (1) selon l'une des revendications 1 à 4, **caractérisé en ce que**
- le boîtier (53) est conçu comme un boîtier cylindrique (53) qui comprend un côté ouvert et un côté fermé, dans lequel le boîtier (53) est fixé au cadre (3) par le côté ouvert.

7. Rétracteur selon l'une des revendications 1 à 5, **caractérisé en ce que**
- une plaque de ressort (8) est agencée entre le ressort rotatif (6) et la broche (2), qui fournit une surface de butée pour le ressort rotatif (6) en direction de la broche (2).

8. Rétracteur selon la revendication 6, **caractérisé en ce que**
- la plaque de ressort (8) comprend une ouverture centrale à travers laquelle s'étend une saillie (21) de la broche (2), et
- le ressort rotatif (6) est fixé par sa seconde extrémité (61) directement ou indirectement à la saillie (21) de la broche (2).

9. Rétracteur selon la revendication 5 et selon l'une des revendications 6 et 7, **caractérisé en ce que**
- le plateau de ressort (8) ferme l'ouverture du boîtier (53).
